(19) Europäisches Patentamt / European Patent Office / Office européen des brevets

(11) **EP 3 329 101 B1**

(12) **FASCICULE DE BREVET EUROPEEN**

(45) Date de publication et mention de la délivrance du brevet:
**14.09.2022 Bulletin 2022/37**

(21) Numéro de dépôt: **16757306.2**

(22) Date de dépôt: **27.07.2016**

(51) Classification Internationale des Brevets (IPC):
*F01D 25/04* (2006.01)   *F02K 3/06* (2006.01)
*F02C 7/047* (2006.01)   *F02C 9/18* (2006.01)
*F01D 25/02* (2006.01)   *F01D 25/24* (2006.01)

(52) Classification Coopérative des Brevets (CPC):
**F02C 7/047; F01D 25/02**

(86) Numéro de dépôt international:
**PCT/FR2016/051953**

(87) Numéro de publication internationale:
**WO 2017/017378 (02.02.2017 Gazette 2017/05)**

(54) **SYSTEME D'ANTIGIVRAGE D'UNE AUBE DE TURBOMACHINE.**

ENTEISUNGSSYSTEM FÜR EINE TURBINENTRIEBWERKSSCHAUFEL

ANTI-ICING SYSTEM FOR A TURBINE ENGINE BLADE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2015 FR 1557285**
**22.01.2016 FR 1550510**

(43) Date de publication de la demande:
**06.06.2018 Bulletin 2018/23**

(73) Titulaire: **Safran Aircraft Engines**
**75015 Paris (FR)**

(72) Inventeurs:
• **LINASSIER, Guillaume Claude Georges Philippe**
**77550 Moissy-Cramayel Cedex (FR)**
• **BALLAND, Morgan**
**77550 Moissy-Cramayel Cedex (FR)**
• **MAZET, Hélène**
**77550 Moissy-Cramayel Cedex (FR)**
• **SCHOLTES, Christophe**
**77550 Moissy-Cramayel Cedex (FR)**
• **BRUNET, Antoine Robert Alain**
**77550 Moissy-Cramayel Cedex (FR)**
• **AMOEDO, Simon**
**77550 Moissy-Cramayel Cedex (FR)**

(74) Mandataire: **Cabinet Beau de Loménie**
**158, rue de l'Université**
**75340 Paris Cedex 07 (FR)**

(56) Documents cités:
**EP-A2- 1 988 259      WO-A1-2009/156600**
**WO-A1-2014/182289      GB-A- 867 849**
**US-A1- 2003 035 719**

**Description**

**DOMAINE TECHNIQUE DE L'INVENTION**

La présente invention se rapporte au domaine général des turbomachines. Elle concerne plus particulièrement un système d'antigivrage d'une aube de turbomachine, en particulier une aube de compresseur située en travers d'une veine primaire de la turbomachine.

**ARRIERE-PLAN TECHNOLOGIQUE DE L'INVENTION**

Une turbomachine comporte classiquement une soufflante délivrant un flux d'air dont une partie centrale, appelée flux primaire, est injectée dans une veine primaire comportant un compresseur, une chambre de combustion et une turbine entrainant la soufflante.

Dans certaines phases de vol (montée, descente...), des conditions atmosphériques dites « givrantes » peuvent être rencontrées lorsque la température ambiante devient inférieure ou égale à zéro degré Celsius. Ces conditions peuvent conduire à des dépôts de givre sur les aubages du compresseur. Le phénomène peut entraîner des problèmes d'opérabilité de la turbomachine, par exemple par obstruction de la veine primaire, ou bien par extinction de la chambre de combustion suite à un détachement de blocs de glace.

Or les solutions classiques de dégivrage d'une aube par circulation d'air chaud ou de composants électriques au sein de ladite aube sont difficilement applicables aux aubes de compresseurs, celles-ci étant de dimensions trop faibles, épaisseur de l'ordre de quelques millimètres. Il est notamment connu des documents GB867849, WO2014/182289, US2003/035719 et EP1988259, des systèmes d'antigivrage tels que décrits dans le préambule de la revendication 1.

**DESCRIPTION GENERALE DE L'INVENTION**

L'invention offre un système d'antigivrage d'une aube de compresseur de turbomachine, mais pouvant s'appliquer plus généralement à toute aube de la turbomachine s'étendant en travers d'une veine, entre un carter interne et un carter externe.

L'invention concerne donc essentiellement un système d'antigivrage d'une aube de turbomachine s'étendant entre un carter externe et un carter interne délimitant une veine tel que défini dans la revendication 1.

La solution proposée consiste à réchauffer la paroi de l'aube exposée à la formation de glace au moyen de l'impact d'un jet d'air chaud. Les moyens d'injection permettent d'injecter le jet d'air chaud dans la veine, en amont de l'aube, via le premier orifice d'injection. Le terme « amont » doit être compris en référence au sens de déplacement du flux d'air s'écoulant dans la veine, ledit flux d'air allant de l'amont vers l'aval. Le jet d'air est alors cisaillé et entraîné par le flux d'air s'écoulant dans la veine. Puis, de par la localisation du premier orifice, le jet d'air entraîné par le flux d'air impacte l'aube au niveau de son bord d'attaque. En définissant avantageusement des paramètres propres au premier orifice d'injection (sa forme, ses dimensions, son inclinaison, etc) et au jet d'air (sa température, sa vitesse, etc.), il est possible de dégivrer convenablement l'aube et/ou d'empêcher la formation de givre sur l'aube.

En écartant ainsi le premier orifice d'au moins 10 mm, et de préférence d'environ 15 mm du bord d'attaque, on s'assure, d'une part, d'être hors de la zone de stagnation de l'aube, et d'autre part, d'être suffisamment éloigné du bord d'attaque de l'aube pour que le cisaillement du jet d'air chaud par le flux d'air primaire circulant dans la veine primaire permette la formation d'un profil d'air chaud dévié vers le bord d'attaque de l'aube s'étendant sur une hauteur suffisamment importante de l'aube pour optimiser la surface dégivrée. L'orifice du système est ainsi positionné suffisamment en amont de l'aube pour laisser assez d'espace au jet chaud pour pénétrer en profondeur dans la veine primaire et ainsi former un profil de d'air chaud s'étendant sur une hauteur de la veine suffisamment importante pour dégivrer les aubes sur une hauteur satisfaisante.

La zone de stagnation de l'aube correspond à une région immédiatement en amont du bord d'attaque de l'aube dans laquelle les mouvements gazeux sont très réduits. La zone de stagnation s'étend généralement en amont de l'aube, sur 2 à 3 mm depuis le bord d'attaque de l'aube.

De manière générale, le système selon l'invention permet, pour un même débit d'air chaud prélevé dans le moteur, d'obtenir une meilleure pénétration du jet d'air chaud dans la veine qu'avec les dispositifs de l'art antérieur. En effet, les études ont notamment montré une augmentation de la pénétration des jets dans la veine jusqu'à 50% de plus qu'avec les dispositifs de l'art antérieur basés sur des jets d'air chaud.

Le système offre un deuxième bénéfice, en cela qu'il permet de dévier la trajectoire de gouttes d'eau en surfusion présentes dans le flux d'air en conditions givrantes. Ces gouttes d'eau ayant une inertie assez faible sont susceptibles de s'adapter rapidement aux changements de trajectoires du flux d'air. Ainsi, de par la topologie du jet d'air cisaillé, les trajectoires de certaines gouttes déviées par le jet ne rencontrent pas la surface de l'aube, minimisant ainsi la quantité de glace formée.

Un autre bénéfice de l'invention est que les gouttes circulant au sein du jet d'air chaud sont également réchauffées. Cet effet se combine à l'échauffement de la paroi de l'aube, en minimisant l'énergie nécessaire pour éviter la congélation des gouttes d'eau sur la surface.

Le système d'antigivrage selon l'invention est adapté aux aubes de faible épaisseur, pour lequel l'implémentation d'un système conventionnel (chauffage interne par air chaud ou système résistif) est difficilement réalisable. De plus, le système n'impose pas l'ajout d'éléments dans la veine pour acheminer le jet d'air en amont de l'aube. L'ajout d'un tel composant aurait un impact sur l'aérodynamisme de la veine.

Outre les caractéristiques qui viennent d'être évoquées dans le paragraphe précédent, le système d'antigivrage selon l'invention peut présenter une ou plusieurs caractéristiques complémentaires parmi les suivantes, considérées individuellement ou selon toutes les combinaisons techniquement possibles.

Selon l'invention définie dans la revendication 1, l'aube présente un bord d'attaque incliné et le premier orifice est positionné à l'aplomb d'un point du bord d'attaque situé à une hauteur d'environ 40% de ladite veine. L'aube est inclinée dans un sens où la jonction entre l'aube et le carter interne est positionnée plus en amont que la jonction entre l'aube et le carter externe de l'anneau.

Selon l'invention définie dans la revendication 1, le premier orifice s'étend sensiblement radialement relativement à un axe longitudinal selon lequel s'étend la turbomachine.

Autrement dit, le premier orifice traverse le carter externe sensiblement radialement. Le jet d'air est alors injecté dans la veine sensiblement orthogonalement au flux d'air, qui lui s'écoule sensiblement selon l'axe longitudinal de la turbomachine. Cet angle de 90° assure une pénétration maximale du jet d'air dans la veine. Ainsi, une hauteur maximale de l'aube peut être antigivrée. On appelle « hauteur de l'aube » la dimension radiale de l'aube (entre le carter interne et le carter externe).

La forme du premier orifice est avantageusement choisie en fonction des conditions aérodynamiques. Pour favoriser la pénétration du jet d'air dans la veine, un orifice de forme ovale alignée avec la direction de l'écoulement du flux d'air est utilisé. En revanche, un orifice cylindrique ou ovale dans le sens transverse à la direction de l'écoulement est utilisé pour favoriser une largeur de jet plus importante.

Dans un mode de réalisation non limitatif, les moyens d'injection comprennent un deuxième orifice d'injection du jet, le deuxième orifice traversant l'organe, et étant localisé de sorte qu'à un deuxième régime de la turbomachine, différent du premier régime, dans lequel le flux d'air s'écoule globalement dans la veine selon une deuxième direction, différente de la première direction, le deuxième orifice et le bord d'attaque de l'aube sont sensiblement alignés selon la deuxième direction.

En effet, l'incidence du flux d'air s'écoulant dans la veine est dépendante du régime moteur. Or, pour un dégivrage optimal, il est important que l'orifice d'injection et le bord d'attaque soient dans la direction du flux d'air, afin que le jet d'air impacte l'aube au niveau de son bord d'attaque. Injecter le jet d'air au niveau du premier orifice ou bien au niveau du deuxième orifice, en fonction de la direction du flux d'air s'écoulant dans la veine (c'est-à-dire en fonction du régime moteur), permet donc d'optimiser le dégivrage.

Naturellement, les moyens d'injections peuvent comprendre d'autres orifices d'injection du jet, traversant l'organe, et localisés de sorte qu'à d'autres régimes de la turbomachine, différents du premier et du deuxième régime, chaque orifice et le bord d'attaque sont sensiblement alignés selon une direction de flux d'air, différente de la première direction et de la deuxième direction, s'écoulant dans la veine.

Dans un mode de réalisation non limitatif, le système d'antigivrage comporte des moyens d'obturation du premier orifice ou du deuxième orifice, commandés en fonction du régime de la turbomachine.

Avantageusement, seul l'orifice aligné avec le bord d'attaque de l'aube selon la direction du flux d'air s'écoulant dans la veine est ouvert.

Dans un mode de réalisation non limitatif, les moyens d'injection comportent une rainure traversant l'organe et des moyens d'obturation partielle de la rainure, le premier orifice étant constitué par la partie non obturée de la rainure.

Dans un mode de réalisation non limitatif, les moyens d'obturation sont mobiles le long de la rainure de sorte à déplacer le premier orifice, les moyens d'obturation étant commandés en fonction du régime de la turbomachine.

Le déplacement des moyens d'obturation par rapport à la rainure permet de régler le positionnement du premier orifice. Ceci permet de le positionner de sorte qu'il soit aligné avec le bord d'attaque de l'aube selon la direction du flux d'air s'écoulant dans la veine.

Dans un mode de réalisation non limitatif, les moyens d'obturation sont couplés à des moyens de calage variable de l'aube. On appelle « moyens de calage variable », des moyens de modification de la position de l'aube dans la veine, modifiant notamment la localisation du bord d'attaque de ladite aube. Cela permet de s'assurer que l'orifice par lequel le jet d'air est injecté est toujours aligné avec le bord d'attaque de l'aube selon la direction du flux d'air s'écoulant dans la veine, même lorsque la position de ce bord d'attaque est modifiée.

Dans un mode de réalisation non limitatif, les moyens d'injection comportent un troisième orifice d'injection traversant l'organe, positionné sensiblement entre le premier orifice et le bord d'attaque.

## EP 3 329 101 B1

Ainsi, il est possible d'injecter le jet d'air dans la veine à la fois au niveau du premier orifice et du troisième orifice. Ceci permet de dégivrer ou d'empêcher la formation de givre sur une hauteur d'aube plus grande. Naturellement, les moyens d'injections peuvent comprendre d'autres orifices d'injection du jet, différents du premier et du troisième orifice, positionnés sensiblement entre le premier orifice et le bord d'attaque.

Dans un mode de réalisation non limitatif, le système d'antigivrage comporte des moyens de prélèvement du jet d'air au niveau d'un compresseur haute pression de la turbomachine. L'air est alors acheminé jusqu'aux moyens d'injection au moyens d'un système de collecteurs, vannes, canalisations, distributeurs.

Dans un mode de réalisation non limitatif, chaque aube comprend une plateforme interne et une plateforme externe entre lesquelles s'étend l'aube, les plateformes internes des aubes d'un même anneau formant une virole interne, les plateformes externes des aubes d'un même anneau formant une virole externe, le carter externe comprenant ladite virole externe de l'aube, la plateforme externe de chaque aube comportant au moins le premier orifice de dégivrage de l'aube.

Dans un autre mode de réalisation non limitatif, le carter externe comporte un bec de séparation de flux destiné à être positionné en aval d'une soufflante de la turbomachine pour former une séparation entre des canaux annulaires d'écoulement d'un flux primaire et d'un flux secondaire issus de la soufflante, ledit bec étant positionné en amont de l'aube et comportant une paroi annulaire extérieure délimitant l'intérieur du canal d'écoulement du flux secondaire et une paroi annulaire intérieure délimitant une entrée du canal d'écoulement du flux primaire, ladite paroi intérieure comportant au moins ledit premier orifice.

L'invention concerne également une turbomachine comportant un système d'antigivrage tel que décrit précédemment.

L'invention sera mieux comprise à la lumière de la description qui suit, et en référence aux figures dont la liste est donnée ci-dessous.

## BREVE DESCRIPTION DES FIGURES

Les figures ne sont présentées qu'à titre indicatif et nullement limitatif. Les figures montrent :

- à la figure 1, une veine de turbomachine selon une coupe longitudinale, en travers de laquelle est positionnée une succession d'aubages, et un système d'antigivrage selon certains aspects de l'invention comprenant un premier orifice

- à la figure 2, une aube en vue de dessus, et un premier orifice d'injection d'un système d'antigivrage selon certains aspects de l'invention

- à la figure 3, une aube en vue de dessus, et un premier orifice et deux deuxièmes orifices d'un système d'antigivrage selon certains aspects de l'invention, dans une première position

- à la figure 4, une aube en vue de dessus, et un premier orifice et deux deuxièmes orifices d'un système d'antigivrage selon certains aspects de l'invention, dans une deuxième position

- à la figure 5, une aube en vue de dessus, et une rainure d'un système d'antigivrage selon certains aspects de l'invention dans une première position

- à la figure 6, une aube en vue de dessus, et une rainure d'un système d'antigivrage selon certains aspects de l'invention, dans une deuxième position

- à la figure 7, une veine de turbomachine selon une coupe longitudinale, en travers de laquelle est positionnée une succession d'aubages, et un système d'antigivrage selon certains aspects de l'invention comprenant un premier orifice et deux troisièmes orifices

- à la figure 8, une aube en vue de dessus, et un premier orifice et deux troisièmes orifices d'un système d'antigivrage selon certains aspects de l'invention

- à la figure 9, un vue plus précise de la partie comprenant un premier ou second orifice Ox et la jonction entre l'aube A1 et le carter externe CE

- à la figure 10, une veine de la turbomachine selon une coupe longitudinale, en travers de laquelle est positionnée une aube A1 et un système d'antigivrage selon certains aspects de l'invention, comprenant un bec de séparation.

4

**DESCRIPTION GENERALE DE L'INVENTION**

Sauf précision contraire, un même élément apparaissant sur des figures différentes présente une référence unique.

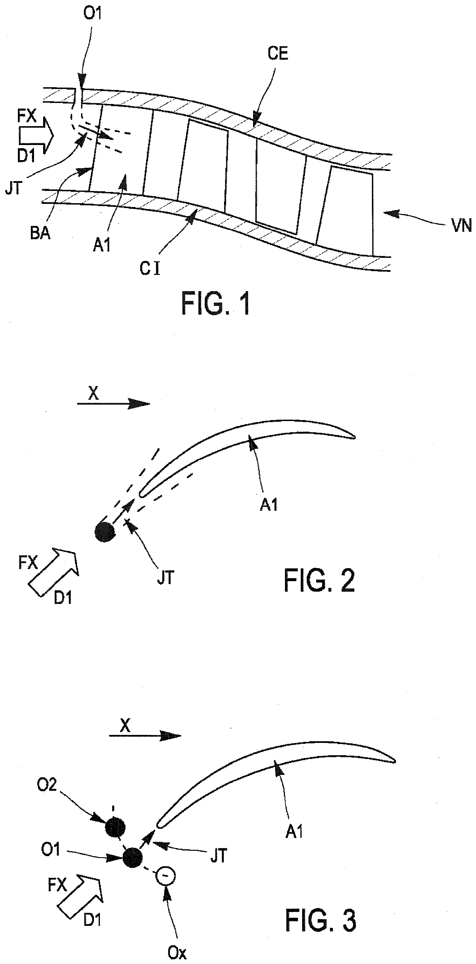

La figure 1 montre une veine VN de turbomachine, délimitée d'une part par un carter externe CE, d'autre part par un carter interne CI. Il s'agit ici d'une veine primaire d'une turbomachine à double flux, la turbomachine s'étendant selon un axe longitudinal X. Toutefois, l'invention pourrait s'appliquer à tout type de turbomachine, y compris une machine monoflux ou une turbine d'hélicoptère. Lorsque la turbomachine est en fonctionnement à un premier régime, un flux d'air FX s'écoule sensiblement selon une première direction D1 au sein de la veine VN. On note que la direction du flux d'air FX dépend directement du régime de fonctionnement de la turbomachine.

En travers de la veine VN s'étendent une série d'aubages. Il s'agit ici d'aubages d'un compresseur de la turbomachine à double flux, installés en aval d'une soufflante de la turbomachine, dans la veine primaire. L'aubage situé le plus en amont dans la veine VN relativement au sens de circulation du flux d'air FX, comporte une pluralité d'aubes, l'une A1 d'entre elles étant visible à la figure 1. Cette aube A1 est fixée d'une part au carter interne CI, d'autre part au carter externe CE.

La turbomachine comporte un système antigivrage permettant de dégivrer ou d'empêcher la formation de givre sur l'aube A1. Le système antigivrage comporte :

- des moyens de prélèvement d'un jet d'air JT au niveau d'un compresseur haute pression de la turbomachine. Le compresseur et les moyens de prélèvement ne sont pas représentés sur les figures. Des jets d'air JT les plus chauds et les plus pressurisés sont privilégiés, afin de réaliser un dégivrage optimal sur une hauteur maximale de l'aube A1.
- des moyens d'acheminement du jet d'air JT en amont de la première aube A1, à proximité de la veine VN. Les moyens d'acheminement comprennent des collecteurs, vannes, canalisations et distributeurs, et ne sont pas représentés sur les figures.
- des moyens d'injection du jet d'air JT chaud dans la veine VN en amont de l'aube A1. Le jet d'air JT chaud est alors dirigé par le flux d'air FX vers l'aube A1, puis impacte un bord d'attaque BA de l'aube A1, augmentant alors la température dudit bord d'attaque BA. Cela permet d'éviter la formation de givre sur le bord d'attaque BA et/ou de dégivrer le bord d'attaque BA.

La figure 2 illustre un premier mode de réalisation des moyens d'injection. Dans ce mode de réalisation, les moyens d'injection comportent un premier orifice O1 d'injection du jet JT, le premier orifice O1 traversant le carter externe CE. Le premier orifice O1 est localisé de sorte qu'au premier régime de la turbomachine dans lequel le flux d'air FX s'écoule globalement dans la veine VN selon la première direction D1, le premier orifice O1 et le bord d'attaque B1 de l'aube A1 sont sensiblement alignés selon la première direction D1. Autrement dit, une droite reliant le premier orifice O1 et le bord d'attaque BA est sensiblement confondue avec la première direction D1.

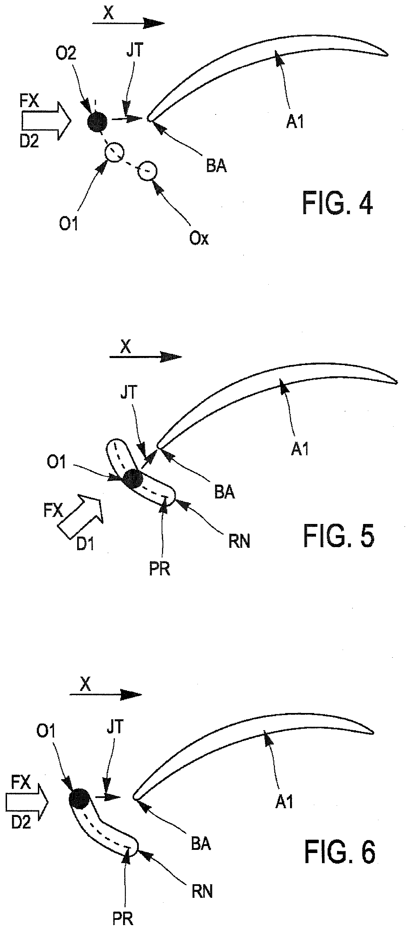

Les figures 3 et 4 illustrent un deuxième mode de réalisation des moyens d'injection, permettant de couvrir une plage d'incidence du flux d'air FX. Dans ce mode de réalisation, les moyens d'injection comportent, outre le premier orifice O1 précédemment décrit, un deuxième orifice O2 traversant le carter externe CE. Le deuxième orifice O2 est localisé de sorte qu'à un deuxième régime de la turbomachine, différent du premier régime, dans lequel le flux d'air FX s'écoule globalement dans la veine VN selon une deuxième direction D2, différente de la première direction D1, le deuxième orifice O2 et le bord d'attaque BA de l'aube A1 sont sensiblement alignés selon la deuxième direction D2. Autrement dit, une droite reliant le deuxième orifice O2 et le bord d'attaque BA est sensiblement confondue avec la deuxième direction D2, comme cela est visible à la figure 4.

Dans le mode de réalisation présenté aux figures 3 et 4, les moyens d'injection comportent, outre le premier orifice O1 et le deuxième orifice O2, un autre orifice Ox. L'autre orifice Ox est localisé de sorte qu'à un autre régime de la turbomachine, différent du premier régime et du deuxième régime, dans lequel le flux d'air FX s'écoule globalement dans la veine VN selon une autre direction, différente de la première direction D1 et de la deuxième direction D2, l'autre orifice Ox et le bord d'attaque BA de l'aube A1 sont sensiblement alignés selon l'autre direction. Autrement dit, une droite reliant l'autre orifice Ox et le bord d'attaque BA est sensiblement confondue avec l'autre direction, non représentée sur les figures.

En outre, les moyens d'injection comportent des moyens d'obturation du premier orifice O1, du deuxième orifice O2 ou de l'autre orifice Ox, commandés en fonction du régime de la turbomachine. Lorsque la turbomachine est dans le premier régime, c'est-à-dire lorsque le flux d'air FX s'écoulant dans la veine suit la première direction D1, comme le montre la figure 3, alors seul le premier orifice O1 est ouvert : le deuxième orifice O2 et l'autre orifice Ox sont obturés par les moyens d'obturation. Lorsque la turbomachine est dans le deuxième régime, c'est-à-dire lorsque le flux d'air FX s'écoulant dans la veine suit la deuxième direction D2, comme le montre la figure 4, alors seul le deuxième orifice O2 est ouvert : le premier orifice O1 et l'autre orifice Ox sont obturés par les moyens d'obturation. Enfin, lorsque la turbomachine est dans l'autre régime, c'est-à-dire lorsque le flux d'air FX s'écoulant dans la veine suit l'autre direction, alors seul l'autre orifice Ox est ouvert : le premier orifice O1 et le deuxième orifice O2 sont obturés par les moyens d'obturation.

Ainsi, seul l'orifice dans l'axe de la direction du flux FX et face au bord d'attaque BA de l'aube A1 est ouvert, et le jet d'air JT est injecté dans la veine VN par cet orifice. Le jet d'air JT cisaillé et entraîné par le flux d'air FX impacte alors le bord d'attaque BA de l'aube A1.

Les figures 5 et 6 illustrent un troisième mode de réalisation des moyens d'injection, qui est une variante du deuxième mode de réalisation précédemment décrit. Dans ce mode de réalisation, les moyens d'injection comportent une rainure RN traversant le carter externe CE et des moyens d'obturation partielle de la rainure RN, le premier orifice O1 étant constitué par la partie non obturée de la rainure RN. Le jet d'air JT est injecté dans la veine VN via le premier orifice O1. De plus, les moyens d'obturation sont mobiles le long de la rainure RN, comme le montrent les figures 5 et 6, de sorte à déplacer le premier orifice O1 le long de la rainure RN. Les moyens d'obturation sont par exemple une paroi PR comportant un trou de la taille du premier orifice O1, mobile le long de la rainure RN. Le déplacement de la paroi PR par rapport à la rainure RN permet de régler le positionnement angulaire du premier orifice d'injection O1, afin qu'il se trouve face au bord d'attaque BA de l'aube A1 et dans la direction du flux d'air FX s'écoulant dans la veine VN. Les moyens d'obturation sont donc commandés en fonction du régime de la turbomachine.

D'autre part, certaines turbomachines comportent des moyens de calage variable des aubages. Sur ce type de turbomachines, l'emplacement du bord d'attaque BA de l'aube A1 est susceptible de changer. Il est donc avantageux de coupler les moyens d'obturation aux moyens de calage variable des aubages, afin de prendre en compte cette variable.

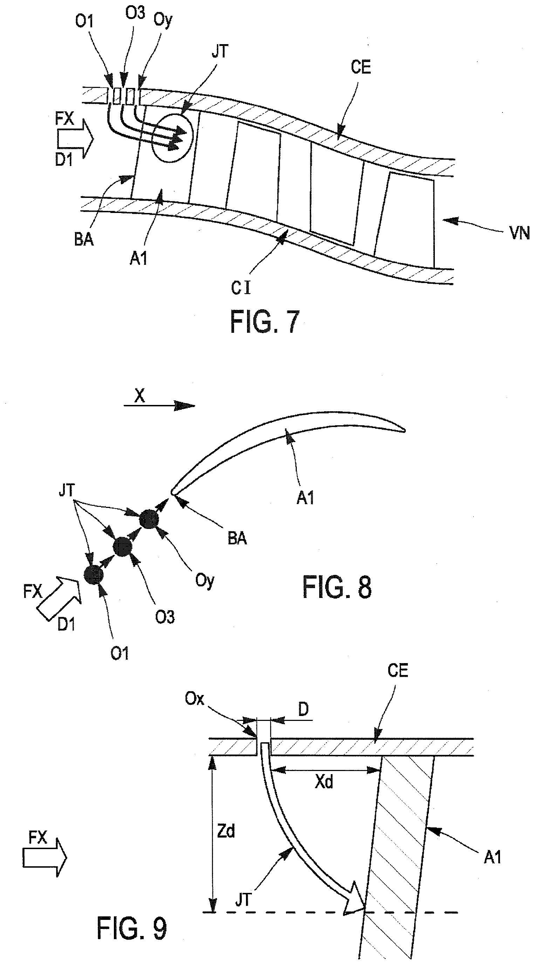

Les figures 7 et 8 illustrent un quatrième mode de réalisation des moyens d'injection. Dans ce mode de réalisation, les moyens d'injection comportent, outre le premier orifice O1 précédemment décrit, un troisième orifice O3 traversant le carter externe CE, positionné sensiblement entre le premier orifice O1 et le bord d'attaque BA de l'aube A1. De plus, dans le mode de réalisation représenté, les moyens d'injection comportent un autre orifice Oy traversant le carter externe CE, positionné sensiblement entre le troisième orifice O3 et le bord d'attaque BA de l'aube A1. Le jet d'air JT est alors injecté dans la veine VN via le premier orifice O1, le troisième orifice O3 et l'autre orifice Oy, ce qui permet d'anti-givrer une zone plus étendue du bord d'attaque BA de l'aube A1.

En outre, dans les modes de réalisations illustrés sur les figures 1 à 9, le premier orifice O1 de dégivrage d'une aube A1 peut être réalisé dans une plateforme externe de l'aube ou bien dans un bec de séparation de flux.

Dans le cas où les orifices sont réalisés dans la plateforme externe de l'aube, chaque aube A1 comprend une plateforme interne et une plateforme externe entre lesquelles s'étend l'aube A1. Dans ce mode de réalisation, les plateformes internes des aubes d'un même anneau forment une virole interne, et les plateformes externes des aubes d'un même anneau forment une virole externe. Le carter externe CE comprend, dans ce mode de réalisation, ladite virole externe de l'aube A1, la virole externe de chaque aube A1 comportant donc chacun des premiers orifices O1 de dégivrage d'aube A1 et les éventuels deuxièmes orifices de dégivrage.

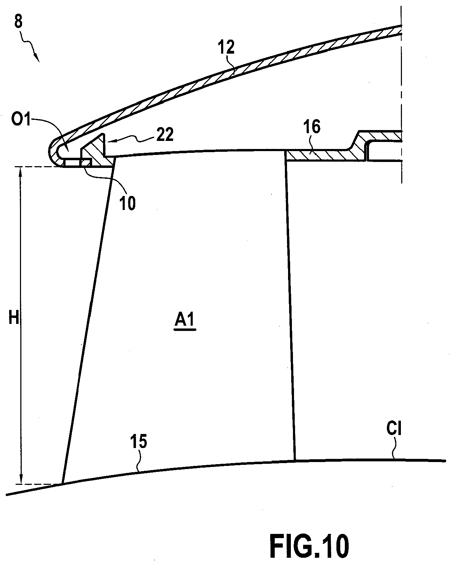

La figure 10 illustre un cinquième mode de réalisation des moyens d'injection, dans lequel le carter externe CE comporte un bec 8 de séparation de flux destiné à être positionné en aval d'une soufflante de la turbomachine pour former une séparation entre des canaux annulaires d'écoulement d'un flux primaire et d'un flux secondaire issus de la soufflante. Le bec 8 est positionné en amont de l'anneau comportant les aubes A1 à dégivrer. L'anneau comprend une virole interne 15 et une virole externe 16 entre lesquelles s'étend l'aube A1, les viroles interne et externe 15 et 16 formant respectivement une plateforme interne et une plateforme externe de l'aube A1 et les viroles interne et externe 15 et 16 étant comprises respectivement dans les carters interne et externe CI et CE. Les aubes A1 sont des aubes inclinées, la jonction entre l'aube A1 et la virole interne 15 de l'anneau étant positionnée plus en amont que la jonction entre l'aube A1 et la virole externe 16 de l'anneau. Le bec 8 de séparation comporte une paroi annulaire extérieure 12 délimitant l'intérieur du canal d'écoulement du flux secondaire et une paroi annulaire intérieure 10 délimitant une entrée du canal d'écoulement du flux primaire. La virole externe 16 de l'anneau est montée et bloquée à l'amont sur la paroi annulaire interne 10 du bec de séparation 8 par un crochet 22 intégré à ladite virole externe 16, et à l'aval sur un carter structural, non représenté, de la turbomachine. Dans ce cinquième mode de réalisation, la paroi intérieure 10 du bec 8 de séparation comporte le premier orifice O1 de dégivrage pour chaque aube A1 et les éventuels deuxièmes orifices de dégivrage. L'axe de chaque orifice O1 est ici sensiblement radial par rapport à l'axe de révolution sur lequel l'anneau comportant les aubes A1 est monté. Les premiers orifices O1 sont ainsi séparés chacun d'une distance H de la virole interne 15 de l'anneau, c'est-à-dire du carter interne CI, délimitant la veine d'écoulement du flux primaire à l'intérieur (la distance H correspond aussi à la hauteur de la veine au droit des orifices d'injection O1).

On note qu'il est naturellement possible de combiner le deuxième ou le troisième mode de réalisation avec le quatrième mode de réalisation, et que le nombre d'orifices peut varier en fonction des besoins.

Par ailleurs, dans les modes de réalisation présentés, les orifices s'étendent radialement à travers le carter externe CE, relativement à l'axe longitudinal X. Autrement dit, des axes selon lesquels s'étendent les orifices et l'axe longitudinal sont orthogonaux. Une orientation à 90° assure en effet une pénétration maximale du jet d'air JT dans la veine VN, ce qui permet d'impacter le bord d'attaque BA de l'aube A1 à une distance de pénétration Zd du carter externe CE maximale, comme cela est montré à la figure 9. Dans d'autres modes de réalisation, ces axes ne sont pas orthogonaux : les orifices sont alors inclinés par rapport à un axe radial, ce qui réduit la distance de pénétration Zd. On note qu'il est naturellement possible d'incliner certains orifices différemment d'autres orifices, en fonction des différents points d'impact souhaités.

De plus, dans les modes de réalisations où le premier orifice O1 est réalisé dans le carter externe CE, celui-ci O1 est positionné en amont du bord d'attaque BA1 de l'aube A1 selon une première direction D1 à une distance d'au moins 10 mm et de préférence à environ 15 mm du bord d'attaque BA1, et plus précisément de la jonction du bord d'attaque BA1 avec le carter externe. Ainsi, dans le cas où l'aube A1 est une aube inclinée, le premier orifice O1 est positionné à l'aplomb d'un point du bord d'attaque BA1 situé à une hauteur d'environ 40% de la veine VN.

Le système antigivrage pouvant être réalisé pour dégivrer toutes les aubes d'un anneau de turbine, il peut y avoir un premier orifice pour chaque aube de l'anneau, les premiers orifices d'injection étant répartis sur la circonférence de la paroi annulaire du carter externe. Les premiers orifices sont circulaires. Dans tous les cas, ils présentent un diamètre hydraulique D respectant l'inégalité $0,02 \leq D/H \leq 0,06$ avec H correspondant à la hauteur de la veine VN comme illustré sur la figure 10. Le diamètre hydraulique est, de façon connue en soi, défini pour de l'air comme le rapport entre quatre fois l'aire de la section de passage d'un orifice et le périmètre de cet orifice. Dans le cas d'un orifice d'injection de section circulaire, le diamètre hydraulique est égal au diamètre de l'orifice.

En outre, les dimensions des orifices influent sur le débit du jet d'air JT injecté dans la veine VN. Ainsi, en ajustant les dimensions des orifices, leur inclinaison et leur éloignement Xd (voir figure 9) par rapport à l'aube A1, il est possible d'impacter le bord d'attaque BA de l'aube A1 sur des zones ciblées. On note que plus les dimensions des orifices sont grandes, plus la quantité d'air prélevé est importante, donc plus le coût en termes de performance moteur est important. Etant donné cette contrainte et l'espace disponible en amont de l'aube A1, des orifices circulaires de diamètre D entre 0,5 et 5 millimètres sont avantageusement utilisés.

Pour un orifice circulaire orienté radialement, les formules ci-dessous (formules de Holdeman) explicitent la corrélation entre la distance de pénétration Zd, le diamètre D de l'orifice et son éloignement Xd par rapport à l'aube A1 :

$$\frac{Zd}{D} = 0.76 \frac{\rho}{\rho_\infty}^{0.71} J^{0.52} \frac{Xd^{0.27}}{D}$$

$$J = \frac{\rho V^2}{\rho_\infty V_\infty^2}$$

où :

- J est le taux de soufflage du jet d'air JT
- p est la masse volumique de l'air dans le jet JT au niveau de l'orifice d'injection
- $\rho_\infty$ est la masse volumique de l'air dans la veine VN en amont de l'aube
- V est la vitesse de l'air dans le jet JT au niveau de l'orifice d'injection
- $V_\infty$ est la vitesse de l'air dans la veine VN en amont de l'aube

Avantageusement, le rapport $\frac{Zd}{D}$ est choisi entre 1 et 200 pour un antigivrage appliqué à une aube de turbomachine. Plus particulièrement, un rapport $\frac{Zd}{D}$ entre 5 et 10 offre un bon compromis entre la température du jet à l'impact, et les contraintes diverses liées à l'intégration de la solution : position, diamètre de l'orifice, débit injecté limité. Avantageusement, le taux de soufflage J est choisi supérieur à 10, ce qui permet d'obtenir un jet fortement décollé du carter. On cherche en effet à optimiser la pénétration du jet dans la veine pour obtenir un système efficace avec un débit limité, et par conséquent un impact performance moindre.

Enfin, afin d'assurer un antigivrage optimal sur une hauteur de l'aube la plus grande possible, il est nécessaire de contrôler la décroissance en température du jet d'air JT. Une température T de jet à l'impact de l'ordre d'au moins quelques dizaines de degrés (entre 40° et 300° Celsius par exemple) est essentielle pour assurer une fonction de dégivrage. La température T de jet à l'impact s'exprime par la relation suivante :

$$T = \left[1,85 \frac{\rho}{\rho_\infty}^{0.71} J^{-0.43} \frac{Xd^{0.27}}{D}\right](T - T_\infty) + T_\infty$$

où $T_\infty$ est la température du jet d'air JT au niveau de l'orifice d'injection.

**Revendications**

1. Système d'antigivrage d'une aube (A1) de turbomachine s'étendant entre un carter externe (CE) et un carter interne (CI) délimitant une veine (VN), le système comprenant l'aube, le carter externe (CE) et des moyens d'injection d'un jet d'air (JT) dans la veine (VN) en amont de l'aube (A1), les moyens d'injection comprenant un premier orifice d'injection (O1) du jet d'air (JT), le premier orifice (O1) traversant le carter externe (CE) et étant localisé de sorte qu'à un premier régime de la turbomachine dans lequel un flux d'air (FX) s'écoule globalement dans la veine (VN) selon une première direction (D1), le premier orifice (O1) et un bord d'attaque (BA) de l'aube (A1) sont sensiblement alignés selon la première direction (D1), **caractérisé en ce que** le premier orifice (O1) est distant de la jonction dudit bord d'attaque (BA) de l'aube (A1) avec le carter externe traversé par le premier orifice (O1) d'une distance d'au moins 10 mm et de préférence d'environ 15 mm, l'aube (A1) présentant un bord d'attaque (BA1) incliné dans un sens où la jonction entre l'aube (A1) et le carter interne (CI) est positionnée plus en amont que la jonction entre l'aube (A1) et le carter externe (CE), le premier orifice (O1) étant positionné à l'aplomb d'un point du bord d'attaque (BA1) situé à une hauteur d'environ 40% de ladite veine (VN), le premier orifice (O1) s'étendant sensiblement radialement relativement à un axe longitudinal (X) selon lequel s'étend la turbomachine, et le premier orifice (O1) présentant une forme circulaire de diamètre D compris entre 0,5 mm et 5 mm et vérifiant l'inégalité $0,02 \leq D/H \leq 0,06$, H correspondant à la hauteur de ladite veine (VN) .

2. Système d'antigivrage selon la revendication 1, **caractérisé en ce que** les moyens d'injection comprennent un deuxième orifice d'injection (O2) du jet d'air (JT), le deuxième orifice (O2) traversant le carter externe (CE), et étant localisé de sorte qu'à un deuxième régime de la turbomachine, différent du premier régime, dans lequel le flux d'air (FX) s'écoule globalement dans la veine (VN) selon une deuxième direction (D2), différente de la première direction (D1), le deuxième orifice (O2) et le bord d'attaque (BA) de l'aube (A1) sont sensiblement alignés selon la deuxième direction (D2).

3. Système d'antigivrage selon la revendication 2, **caractérisé en ce qu'**il comporte des moyens d'obturation du premier orifice (O1) ou du deuxième orifice (O2), commandés en fonction du régime de la turbomachine.

4. Système d'antigivrage selon la revendication 1, **caractérisé en ce que** les moyens d'injection comportent une rainure (RN) traversant le carter externe (CE) et des moyens d'obturation (PR) partielle de la rainure, le premier orifice (O1) étant constitué par la partie non obturée de la rainure (RN).

5. Système d'antigivrage selon l'une des revendications 2 à 4, **caractérisé en ce que** les moyens d'obturation sont couplés à des moyens de calage variable de l'aube (A1).

6. Système d'antigivrage selon l'une des revendications 1 à 5, **caractérisé en ce que** les moyens d'injection comportent un troisième orifice d'injection (O3) traversant le carter externe (CE), positionné sensiblement entre le premier orifice (O1) et le bord d'attaque (BA).

7. Système d'antigivrage selon l'une des revendications 1 à 6, **caractérisé en ce qu'**il comporte des moyens de prélèvement du jet d'air (JT) au niveau d'un compresseur de la turbomachine et un taux de soufflage supérieur à 10.

8. Système d'antigivrage selon l'une des revendications 1 à 7, dans lequel chaque aube (A1) comprend une plateforme interne et une plateforme externe entre lesquelles s'étend l'aube (A1), les plateformes internes des aubes d'un même anneau formant une virole interne, les plateformes externes des aubes d'un même anneau formant une virole externe, le carter externe (CE) comprenant ladite virole externe de l'aube (A1), la plateforme externe de chaque aube (A1) comportant au moins le premier orifice (O1) de dégivrage de l'aube (A1).

9. Système d'antigivrage selon l'une des revendications 1 à 8, dans lequel le carter externe (CE) comporte un bec de séparation de flux destiné à être positionné en aval d'une soufflante de la turbomachine pour former une séparation entre des canaux annulaires d'écoulement d'un flux primaire et d'un flux secondaire issus de la soufflante, ledit bec étant positionné en amont de l'aube (A1) et comportant une paroi annulaire extérieure (12) délimitant l'intérieur du canal d'écoulement du flux secondaire et une paroi annulaire intérieure délimitant une entrée du canal d'écoulement du flux primaire, ladite paroi intérieure comportant au moins ledit premier orifice (O1).

**Patentansprüche**

1. Enteisungssystem für eine Turbinentriebwerksschaufel (A1), die sich zwischen einem äußeren Gehäuse (CE) und einem inneren Gehäuse (CI) erstreckt, die einen Gang (VN) abgrenzen, wobei das System die Schaufel, das äußere Gehäuse (CE) und Mittel zum Einpressen eines Luftstrahls (JT) in den Gang (VN) stromaufwärts der Schaufel (A1) umfasst, wobei die Einpressmittel eine erste Öffnung (01) zum Einpressen des Luftstrahls (JT) umfassen, wobei die erste Öffnung (01) das äußere Gehäuse (CE) durchquert und derart angeordnet ist, dass ein erster Betrieb des Turbinentriebwerks, in dem eine Luftströmung (FX) global entlang einer ersten Richtung (D1) in dem Gang (VN) abströmt, die erste Öffnung (01) und eine Vorderkante (BA) der Schaufel (A1) im Wesentlichen entlang der ersten Richtung (D1) ausgerichtet sind, **dadurch gekennzeichnet, dass** die erste Öffnung (01) von der Verbindung der Vorderkante (BA) der Schaufel (A1) mit dem von der ersten Öffnung (01) durchquerten äußeren Gehäuse um einen Abstand von mindestens 10 mm und vorzugsweise mindestens ungefähr 15 mm entfernt ist, wobei die Schaufel (A1) eine Vorderkante (BA1) aufweist, die in einer Richtung geneigt ist, in der die Verbindung zwischen der Schaufel (A1) und dem inneren Gehäuse (CI) weiter stromaufwärts positioniert ist als die Verbindung zwischen der Schaufel (A1) und dem äußeren Gehäuse (CE), wobei die erste Öffnung (01) lotrecht von einem Punkt der Vorderkante (BA1) positioniert ist, der sich in einer Höhe von ungefähr 40 % des Gangs (VN) befindet, wobei die erste Öffnung (01) sich im Wesentlichen radial in Bezug auf eine Längsachse (X) erstreckt, entlang der sich die Turbomaschine erstreckt, und die erste Öffnung (01) eine Form eines Kreises mit einem Durchmesser D von zwischen 0,5 mm und 5 mm aufweist und die Ungleichung $0{,}02 \leq D/H \leq 0{,}06$ erfüllt, wobei H der Höhe des Gangs (VN) entspricht.

2. Enteisungssystem nach Anspruch 1, **dadurch gekennzeichnet, dass** die Einpressmittel eine zweite Öffnung (02) zum Einpressen des Luftstrahls (JT) umfassen, wobei die zweite Öffnung (02) das äußere Gehäuse (CE) durchquert und derart angeordnet ist, dass bei einem zweiten Betrieb der Turbomaschine, der sich von dem ersten Betrieb unterscheidet und in dem die Luftströmung (FX) global entlang einer zweiten Richtung (D2) in dem Gang (VN) abströmt, die sich von der ersten Richtung (D1) unterscheidet, die zweite Öffnung (02) und die Vorderkante (BA) der Schaufel (A1) im Wesentlichen entlang der zweiten Richtung (D2) ausgerichtet sind.

3. Enteisungssystem nach Anspruch 2, **dadurch gekennzeichnet, dass** es Mittel zum Verschließen der ersten Öffnung (01) oder der zweiten Öffnung (02) umfasst, die in Abhängigkeit vom Betrieb der Turbomaschine gesteuert werden.

4. Enteisungssystem nach Anspruch 1, **dadurch gekennzeichnet, dass** die Einpressmittel eine Rille (RN), die das äußere Gehäuse (CE) durchquert, und Mittel (PR) zum partiellen Verschließen der Rille umfassen, wobei die erste Öffnung (01) durch den nicht verschlossenen Teil der Rille (RN) gebildet ist.

5. Enteisungssystem nach einem der Ansprüche 2 bis 4, **dadurch gekennzeichnet, dass** die Verschließmittel an Mittel zur variablen Verkeilung der Schaufel (A1) gekoppelt sind.

6. Enteisungssystem nach einem der Ansprüche 1 bis 5, **dadurch gekennzeichnet, dass** die Einpressmittel eine dritte Einpressöffnung (03) umfassen, die das äußere Gehäuse (CE) durchquert und im Wesentlichen zwischen der ersten Öffnung (01) und der Vorderkante (BA) positioniert ist.

7. Enteisungssystem nach einem der Ansprüche 1 bis 6, **dadurch gekennzeichnet, dass** es Mittel zur Entnahme des Luftstrahls (JT) im Bereich eines Verdichters des Turbinentriebwerks und eine Ausblaserate von höher als 10 umfasst.

8. Enteisungssystem nach einem der Ansprüche 1 bis 7, wobei jede Schaufel (A1) eine innere Plattform und eine äußere Plattform umfasst, zwischen denen sich die Schaufel (A1) erstreckt, wobei die inneren Plattformen der Schaufeln eines selben Ringes einen inneren Mantel bilden, wobei die äußeren Plattformen der Schaufeln eines selben Ringes einen äußeren Mantel bilden, wobei das äußere Gehäuse (CE) den äußeren Mantel der Schaufel (A1) umfasst, wobei die äußere Plattform von jeder Schaufel (A1) mindestens die erste Enteisungsöffnung (01) der Schaufel (A1) umfasst.

9. Enteisungssystem nach einem der Ansprüche 1 bis 8, wobei das äußere Gehäuse (CE) eine Strömungstrennungsmündung umfasst, die dazu bestimmt ist, stromabwärts eines Turbinentriebwerksgebläses positioniert zu sein, um eine Trennung zwischen ringförmigen Abströmkanälen einer Primärströmung und einer Sekundärströmung, die von dem Gebläse stammen, zu bilden, wobei die Mündung stromaufwärts der Schaufel (A1) positioniert ist und eine ringförmige äußere Wand (12), die das Innere des Abströmkanals von der Sekundärströmung abgrenzt, und eine ringförmige innere Wand umfasst, die einen Eingang des Abströmkanals der Primärströmung abgrenzt, wobei die innere Wand mindestens die erste Öffnung (01) umfasst.

**Claims**

1. An anti-icing system for a turbine engine vane (A1) extending between an outer casing (CE) and an inner casing (CI) defining a passage (VN), the system comprising the vane (A1), the outer casing (CE) and injector means for injecting a jet of air (JT) into the passage (VN) upstream from the vane (A1), the injector means including a first injection orifice (O1) for injecting the jet of air (JT), the first orifice (O1) passing through the outer casing (CE) and being located in such a manner that, at a first speed of the engine in which a stream of air (FX) flows generally in the passage (VN) along a first direction (D1), the first orifice (O1) and a leading edge (BA) of the vane (A1) are substantially in alignment along the first direction (D1), the system being **characterized in that** the first orifice (O1) is spaced apart from the junction between said leading edge (BA) of the vane (A1) and the outer casing through which the first orifice (O1) passes by a distance of at least 10 mm, and preferably of about 15 mm, the vane (A1) presenting a leading edge (BA1) sloping in a direction such that the junction between the vane (A1) and the inner casing (CI) is positioned further upstream than is the junction between the vane (A1) and the outer casing (CE), the first orifice (O1) is positioned in register with a point of the leading edge (BA1) situated at a height of about 40% of said passage (VN), the first orifice (O1) extending substantially radially relative to a longitudinal axis (X) along which the turbine engine extends, the first orifice (O1) being circular in shape having a diameter D lying in the range 0.5 mm to 5 mm and that satisfies the inequality $0.02 \leq D/H \leq 0.6$, where H corresponds to the height of said passage (VN).

2. An anti-icing system according to claim 1, **characterized in that** the injector means include a second injection orifice (O2) for injecting the jet of air (JT), the second orifice (O2) passing through the outer casing (CE) and being located in such a manner that at a second speed of the engine, different from the first speed, in which the stream of air (FX) flows generally in the passage (VN) along a second direction (D2), different from the first direction (D1), the second orifice (O2) and the leading edge (BA) of the vane (A1) are substantially in alignment along the second direction (D2) .

3. An anti-icing system according to claim 2, **characterized in that** it includes shutter means for shutting the first orifice (O1) or the second orifice (O2) and controlled as a function of the speed of the engine.

4. An anti-icing system according to claim 1, **characterized in that** the injector means include a slot (RN) passing through the outer casing (CE) and shutter means (PR) for partially shutting the slot, the first orifice (O1) being constituted by the portion of the slot (RN) that is not shut.

5. An anti-icing system according to any one of claims 2 to 4, **characterized in that** the shutter means are coupled to means for varying the pitch of the vane (A1).

6. An anti-icing system according to any one of claims 1 to 5, **characterized in that** the injector means include a third injection orifice (O3) passing through the outer casing (CE), and positioned substantially between the first orifice (O1) and the leading edge (BA).

7. An anti-icing system according to any one of claims 1 to 6, **characterized in that** it includes means for taking the jet of air (JT) from a compressor of the engine and **in that** it has a blow-up ratio greater than 10.

8. An anti-icing system according to any one of claims 1 to 7, wherein each vane (A1) has an inner platform and an outer platform between which the vane (A1) extends, the inner platforms of the vanes in a given ring forming an inner shroud, the outer platforms of the vanes in a given ring forming an outer shroud, the outer casing (CE) including said outer shroud of the vane (A1), the outer platform of each vane (A1) including at least the first orifice (O1) for de-icing the vane (A1).

9. An anti-icing system according to any one of claims 1 to 8, wherein the outer casing (CE) includes a stream splitter nose for positioning downstream form a fan of the engine in order to separate a primary stream and a secondary stream coming from the fan between annular channels, said nose being positioned upstream from the vane (A1) and having an outer annular wall (12) defining the inside of the flow channel for the secondary stream and an inner annular wall defining an inlet to the flow channel for the primary stream, said inner wall including at least said first orifice (O1).

FIG. 1

FIG. 2

FIG. 3

FIG. 4

FIG. 5

FIG. 6

FIG. 7

FIG. 8

FIG. 9

8

12

O1

22

16

10

H

A1

15

CI

**FIG.10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 867849 A
- WO 2014182289 A
- US 2003035719 A
- EP 1988259 A